# EUROPÄISCHE PATENTSCHRIFT

(11) **EP 2 932 818 B1**
(45) Veröffentlichungstag und Bekanntmachung des Hinweises auf die Patenterteilung: **01.08.2018**
(21) Anmeldenummer: 14164868.3
(22) Anmeldetag: 16.04.2014
(51) Int. Cl.: A01C 7/08, A01C 7/10

(54) **Verteilvorrichtung und Verfahren zum Ausbringen von granulatartigem Verteilgut**
Distribution device and method for delivery of granular goods
Dispositif d'épandage et procédé d'épandage de produit granulaire

(43) Veröffentlichungstag der Anmeldung: 21.10.2015
(73) Patentinhaber: Horsch Maschinen GmbH, 92421 Schwandorf (DE)
(72) Erfinder: Horsch, Philipp, 92421 Schwandorf (DE)
(74) Vertreter: Benninger, Johannes

(56) Entgegenhaltungen:
- EP-B1- 2 281 426
- WO-A2-2012/170690
- DE-A1-102008 016 107
- US-A1- 2012 227 647

## Beschreibung

Die vorliegende Erfindung betrifft eine Verteilvorrichtung für granulatartiges Verteilgut mit den Merkmalen des unabhängigen Anspruches 1, insbesondere eine landwirtschaftliche Verteil- oder Sämaschine. Die Erfindung betrifft zudem ein Verfahren zur geregelten Ausbringung und/oder Verteilung von granulatartigem Verteilgut mit den Merkmalen des unabhängigen Verfahrensanspruchs 4. Bei Verteilvorrichtungen wie Sämaschinen ist eine exakte Dosierung des Verteilguts nicht nur im Interesse einer möglichst gleichmäßigen Verteilung wünschenswert, sondern dient auch einer Kostenersparnis, da bspw. der optimale Feldaufgang bei Getreide von der exakten Einhaltung einer bestimmten Ausbringmenge je Flächeneinheit abhängig ist. Die Erfassung der Korndichte in leitungsgeführten Luftströmen bzw. die Anzahl der passierenden Körner je Zeiteinheit erfolgte bisher üblicherweise mittels optischer Sensoren, wie sie bspw. in der DE 10 2007 031 576 A1 beschrieben sind. Um die Nachteile solcher optischer Sensoren wie bspw. ihre Störanfälligkeit und ungenaue Kornerfassung bei erhöhter Luftfeuchte innerhalb des Förderluftstroms zu vermeiden, wurden Systeme mit piezoelektrisch arbeitenden Kornsensoren entwickelt.

So beschreibt die WO 2011/054 340 A1 eine Kornerfassungsvorrichtung, die sich insbesondere für Sämaschinen eignen soll. Die Vorrichtung umfasst eine Sensoreinheit mit piezoelektrisch arbeitenden Sensorelementen, die beim Auftreffen von Masseteilchen wie Saatkörnern jeweils auswertbare Impulssignale erzeugen. Dort ist weiterhin eine Sämaschine mit einem Saatgutspeicher und einer Ausbringeinrichtung zum Ausbringen von Saatgut aus dem Saatgutspeicher offenbart, wobei in einem Saatgutleitungssystem mit einem Hauptstromverteiler eine Kornerfassungsvorrichtung mit piezoelektrisch arbeitenden Kornerfassungssensoren angeordnet ist, mit dem die bewegten und geförderten Masseteilchen und Samenkörner erfasst werden.

Darüber hinaus sind Überwachungseinrichtungen zur Erfassung von Kornverlusten in Erntemaschinen bekannt, die mit Pralldetektoren arbeiten. Eine solche Einrichtung geht bspw. aus der EP 0 339 142 A1 hervor.

Derartige Pralldetektoren sind auch für einen Einsatz in Sämaschinen bekannt geworden, wie dies bspw. in der EP 1 341 122 A1 und auch in der EP 2 281 426 B1 beschrieben ist.

Die WO 2012/125 575 A1 beschreibt eine Kornflussüberwachungseinrichtung für eine Sämaschine, die mit elektromechanisch arbeitenden Aufpralldetektoren arbeitet und die Signale dieser Detektoren, die jeweils in den Saatleitungen angeordnet sind, zur Erfassung des Kornflusses und zur optischen Anzeige verwendet.

Eine Sämaschine mit Durchflusssensoren im Förderbereich für Saatgut und mit Geschwindigkeitssensoren zur Abstimmung der Ausbringrate des Saatguts auf die jeweils gefahrenen Geschwindigkeiten der Vorrichtung während des Sävorganges ist bspw. aus der EP 2 708 104 A2 bekannt. Die EP 2 708 105 A2 offenbart weiterhin eine Sämaschine mit mehreren Sensoren im Förderbereich, die ihre Ausgangssignale an ein Anzeigesystem liefern, das den aktuellen Durchfluss an gefördertem Saatgut anzeigt und/oder speichert.

Eine Messeinrichtung zur Erfassung eines Tankvolumens, insbesondere für einen Zentraltank einer Sämaschine, ist zudem aus der EP 2 708 859 A1 bekannt. Im Tank sind mehrere Sensoren angeordnet, die den jeweiligen Abstand zum Füllgutniveau erfassen, woraus eine Auswerteeinheit eine Information über das Füllgutprofil gewinnt.

Durch die US 2012/0227647 A1 ist eine Vorrichtung zur Überwachung des Materialflusses und ein Ausgleichssystem zur Messung und/oder Ausgleichung der Strömung von Samen einer pneumatischen Drillmaschine bekannt, wobei einer Verteileinheit eine Sensoreinheit und eine Überwachungseinheit zugeordnet ist. Bei einer möglichen Blockade eines Särohrs kann die Störung mittels der Überwachungseinheit angezeigt werden und ggf. durch einen manuellen Eingriff und/oder einer anderweitig automatisch Einheit behoben werden.

Die Aufgabe der vorliegenden Erfindung besteht darin, ein Verteilvorrichtung und ein Verfahren zum Ausbringen von granulatartigem Verteilgut zur Verfügung zu stellen, bei dem nicht nur die Ausbringmenge an Verteilgut erfasst und überwacht werden kann, sondern die auf Grundlage der erfassten Verteilgutmenge einen Eingriff in die Mengensteuerung und/oder eine Variation der ausgebrachten Mengen an Verteilgut erlaubt.

Diese Aufgabe wird durch eine Verteilvorrichtung mit den Merkmalen des Anspruchs 1 sowie durch ein Verfahren mit den Merkmalen des Anspruchs 4 gelöst. Weitere vorteilhafte Ausgestaltungen werden durch die Unteransprüche beschrieben.

Um das oben genannte Ziel der Erfindung zu erreichen, wird eine Verteilvorrichtung für granulatartiges Verteilgut mit den Merkmalen des Anspruchs 1 vorgeschlagen. Die erfindungsgemäße Verteilvorrichtung dient insbesondere zum Verteilen und/oder Ausbringen von für körnigem Verteilgut, Saatgut, Dünger o. dgl. auf Ausbringflächen wie landwirtschaftlichen Nutzflächen, Äckern etc. und kann insbesondere durch eine Sämaschine gebildet sein. Die Verteil- oder Sävorrichtung weist eine Luftfördereinheit zur Erzeugung eines Luftvolumenstroms auf, der eine Dosiereinheit zur steuerbaren, insbesondere zur volumetrischen Zuteilung des Verteilguts oder Saatguts zum Luftvolumenstrom zu- oder nachgeordnet ist. Außerdem ist wenigstens eine Verteileinheit zur Aufteilung des das Verteilgut tragenden Luftvolumenstroms von wenigstens einer Haupt- oder Speiseleitung zu einer Mehrzahl von Verbindungsleitungen vorgesehen. Die Verbindungsleitungen führen jeweils zu einzelnen Säscharen oder anderen bodennah angeordneten oder im Boden geführten Ausbringeinrichtungen für das Verteil- oder Saatgut. Im Bereich der Verteileinheit und/oder innerhalb eines Verbindungsabschnittes wenigstens einer der von der Verteileinheit mündenden Verbindungsleitungen ist mindestens eine Sensoreinheit zur Erfassung weitgehend aller im Luftstrom bzw. im jeweiligen Teilstrom getragenen und diese Sensoreinheit passierenden Körner des Verteilguts angeordnet. Die wenigstens eine Sensoreinheit kann insbesondere nach einem piezoelektrischen Sensorprinzip arbeiten und dadurch alle im Luftstrom getragenen und die Sensoreinheit passierenden Körner durch mechanische Einwirkung erfassen und entsprechende Sensorsignale erzeugen, welche die Anzahl der je Zeiteinheit passierenden und auf die Sensoreinheit einwirkenden Körner anzeigen. Zudem ist die wenigstens eine Sensoreinheit signaltechnisch mit wenigstens einer Einrichtung zur Variation eines Luft- und/oder Kornvolumenstroms im Bereich der Verteileinheit und/oder den dieser nachgeordneten Verbindungsleitungen gekoppelt.

Bei der erfindungsgemäßen Verteilvorrichtung kann bspw. vorgesehen sein, dass die wenigstens eine in der Verbindungsleitung angeordnete Sensoreinheit signaltechnisch mit einer Einrichtung zur Variation des Luft- und/oder Kornvolumenstroms gekoppelt ist und/oder deren Durchflussstellung beeinflusst. Diese Einrichtung ist normalerweise in oder an derselben Verbindungsleitung zugeordnet bzw. dort angeordnet, wo auch die Sensoreinheit angeordnet bzw. platziert ist. Auf diese Weise ermöglicht die Sensorik der Verteilvorrichtung einerseits die globale Überwachung einiger oder aller Verbindungsleitungen zur Generierung eines Steuersignals zur Variation des Luft- und/oder Kornvolumenstroms. Ebenso möglich ist jedoch die Überwachung einiger oder aller einzelnen Leitungen bzw. Verbindungsleitungen, mit denen das Saat- oder Verteilgut mittels des Trägerluftstroms zu den Ausbringeinheiten oder Säscharen befördert wird. Auf diese Weise wird eine qualitative Messung innerhalb der einzelnen Verbindungsleitungen ermöglicht, wobei diese qualitative Messung einerseits die Erfassung der Kornströme auf ihre Korndichte je Zeiteinheit als auch und insbesondere die Erfassung der jeweiligen Kornabstände bedeuten kann. Die zuletzt erwähnte Erfassung der Kornabstände an den jeweiligen Sensoren ermöglichen Eingriffe an der Dosierung innerhalb der einzelnen Leitungen und auch die Optimierung der Kornflüsse bzw. der Kornabstände.

Ebenso möglich ist die Verwendung von Sensoreinheiten für eine quantitative Erfassung weitgehend aller im Luftstrom bzw. im jeweiligen Teilstrom getragenen und die jeweiligen Sensoreinheiten passierenden Körner des Verteilguts, womit insbesondere eine Eingriffsmöglichkeit auf die Querverteilung an den Säscharen gegeben ist. Die Querverteilung kann bspw. durch Veränderung des Luftstromes beeinflusst und optimiert werden.

Wie erwähnt, kann bei einer Ausführungsvariante der erfindungsgemäßen Verteilvorrichtung oder Sämaschine die wenigstens eine Sensoreinheit eine geeignete Prallfläche aufweisen, die in der Lage ist, bspw. innerhalb eines Außenbereichs eines gekrümmten Leitungsabschnittes weitgehend alle passierenden Körner auftreffen zu lassen und dadurch signaltechnisch zu erfassen. Die Sensoreinheit kann bspw. eine piezoelektrisch arbeitende Sensorfläche oder mehrere piezoelektrisch arbeitende Sensorflächen umfassen, an der/denen der gesamte Luftvolumenstrom mit dem darin beförderten Verteilgut unter Kontaktierung weitgehend aller im Luftstrom bzw. im jeweiligen Teilstrom getragenen Körner vorbeipassiert. Grundsätzlich können jedoch auch andere Sensorprinzipien eingesetzt werden, bspw. optische Durchflusssensoren oder andere berührungslos arbeitende Sensoren wie bspw. induktive Sensoren. Die Steuerung der Variationseinrichtung soll dabei erfindungsgemäß in Abhängigkeit von den Ausgangs- oder Impulssignalen der wenigstens einen Sensoreinheit erfolgen. D.h., die Sensorsignale werden nicht nur zur Visualisierung der Kornförderung verwendet, um auf dieser Basis bspw. die Förderparameter global zu verändern, sondern es soll mit Hilfe der erfassten Sensorsignale die Durchflussparameter in den Leitungen beeinflusst werden, um eine direkte Kornflussregelung zu erhalten, die jederzeit und ohne nennenswerte Regelverzögerungen einen vorgegebenen Kornfluss je Zeiteinheit durch Variation eines Luftvolumenstroms, insbesondere durch Variation eines effektiven Leitungsquerschnittes in wenigstens einem Leitungsabschnitt gewährleisten kann.

Bei der erfindungsgemäßen Verteilvorrichtung ist die wenigstens eine Sensoreinheit signaltechnisch mit einer Steuer- und/oder Regeleinheit gekoppelt. Die Steuer- und/oder Regeleinheit steuert damit in Abhängigkeit von den Ausgangs- oder Impulssignalen der wenigstens einen Sensoreinheit die zumindest eine Einrichtung zur Variation des Luft- und/oder Kornvolumenstroms in einer Weise, dass ein Durchlassquerschnitt und/oder ein Volumenstrom regulierbar ist. Aufgrund der in der Dosiereinheit vorgegebenen Zusammenhänge zwischen Luftvolumenstrom und Anzahl der je Luftmenge getragenen Körner kann durch die Variation des Durchlassquerschnitts eines Abschnittes der Förderleitung auch gleichzeitig die Kornzahl je Zeiteinheit gesteuert werden, wodurch die gewünschte Kornflussregelung erreicht werden kann.

Typische Sämaschinen oder Verteilvorrichtungen weisen wenigstens eine Verteileinheit auf, die durch einen Verteilkopf gebildet ist, der eine Mehrzahl von ungefähr konzentrisch angeordneten Anschlussstutzen aufweist, die jeweils in die Schlauchleitungen münden, wobei zumindest einigen der Anschlussstutzen jeweils Sensoreinheiten zur quantitativen Erfassung des den Anschlussstutzen jeweils passierenden Teilstroms zugeordnet sind. Wahlweise können auch zwei oder mehr solche Verteilköpfe vorgesehen sein, insbesondere bei einer großen Reihenanzahl und einer entsprechenden Anzahl von erforderlichen Leitungen, die insgesamt von den Verteilköpfen münden. Derartige Verteilköpfe sind seit langem bekannt, weisen einen senkrecht aufsteigenden Leitungsabschnitt mit Wellrohr auf, der in einem pilzförmigen Verteilerkopf münden, in dem die durch den senkrechten Leitungsabschnitt geförderte Luft mitsamt den mitgetragenen Körnern möglichst gleichmäßig auf bspw. 12, 16, 20 oder mehr konzentrisch angeordnete Schlauchstutzen verteilt wird, an denen jeweils die Verbindungsleitungen zu den Ausbringeinheiten - dies sind bspw. Säschare - angeschlossen sind.

Die steuerbaren Einrichtungen zur Variation des Luft- und/oder Kornvolumenstroms wird jeweils durch steuerbare Ventile gebildet, die in den Anschlussstutzen angeordnet sind und deren Durchlassquerschnitt variieren. Als solche Ventile kommen bspw. Walzen- oder sog. Drehschieberventile oder auch einfache Schieberventile oder andere Bauarten in Frage, die auf einfache und schnelle Weise den effektiven Durchlassquerschnitt variieren können. Weiterhin kann vorgesehen sein, dass die Sensoreinheiten jeweils den Ventilen innerhalb eines Förderabschnittes nachgeordnet sind. Es ist nicht zwingend erforderlich, dass an jedem Anschlussstutzen des Verteilkopfes jeweils ein Sensorelement und/oder jeweils ein Ventil angeordnet sind, da es ggf. auch ausreichen kann, die geförderte Kornmenge an jedem zweiten, dritten, vierten usw. Leitungsabschnitt zu erfassen und dementsprechend auch die Förderquerschnitte zu variieren. Auch hierbei kann es ggf. ausreichen, nur in jedem zweiten, dritten, vierten usw. Leitungsabschnitt ein einzelnes steuerbares Ventil anzuordnen.

Weiterhin ist bei der erfindungsgemäßen Verteilvorrichtung vorgesehen, dass die Sensoreinheiten mit den Ventilen in einem Regelkreis verschaltet sind, der eine Ausbringmenge an Körnern an den Säscharen oder Ausbringeinrichtungen unter Regelung einer von der Dosiereinheit in den Luftvolumenstrom zugebbaren Kornmenge sowie des Luftvolumenstroms variiert. Darüber hinaus kann ggf. eine zusätzliche Visualisierung für den Fahrer und/oder Steuer- und/oder Eingriffsmöglichkeiten für den Fahrer vorgesehen sein, mit denen die Ausbringparameter in gewünschter Weise beeinflusst bzw. variiert werden können.

Zur Erreichung des oben genannten Ziels der Erfindung schlägt diese darüber hinaus ein Verfahren zur geregelten Ausbringung und/oder Verteilung von granulatartigem Verteilgut, insbesondere von körnigem Saatgut, Dünger o. dgl., insbesondere zur Aussaat vor. Bei diesem erfindungsgemäßen Verfahren wird einem Luftvolumenstrom das Verteilgut oder Saatgut zudosiert und einer Verteileinheit zugeführt, in der der das Verteilgut tragende Luftvolumenstrom von wenigstens einer Haupt- oder Speiseleitung zu einer Mehrzahl von Verbindungsleitungen, die jeweils zu einzelnen Säscharen oder anderen bodennah angeordneten oder im Boden geführten Ausbringeinrichtungen für das Verteil- oder Saatgut führen, aufgeteilt wird. Im Bereich der Verteileinheit und/oder innerhalb eines Verbindungsabschnittes wenigstens einer der von der Verteileinheit mündenden Verbindungsleitungen werden weitgehend alle im Luftstrom bzw. im jeweiligen Teilstrom getragenen Körner des Verteilguts erfasst. Bei dem Verfahren wird in Abhängigkeit von der erfassten Kornmenge der Luft- und/oder Kornvolumenstrom im Bereich der Verteileinheit und/oder den dieser nachgeordneten Verbindungsleitungen und/oder ein Durchlassquerschnitt der wenigstens einen Verbindungsleitung variiert.

Bei einer Variante des erfindungsgemäßen Verfahrens kann die wenigstens eine in der Verbindungsleitung angeordnete Sensoreinheit mit einer derselben Verbindungsleitung zugeordneten Einrichtung zur Variation des Luft- und/oder Kornvolumenstroms gekoppelt sein und/oder deren Durchflussstellung beeinflussen. Auf diese Weise kann bspw. der Kornabstand an der jeweiligen Sensoreinheit erfasst und unmittelbar in derselben Verbindungsleitung beeinflusst bzw. optimiert werden, insbesondere durch Variation eines Öffnungsquerschnittes eines zugeordneten steuerbaren Ventils o. dgl.

Weiterhin kann das Verfahren vorsehen, dass die mindestens eine Sensoreinheit weitgehend alle im Luftstrom bzw. im jeweiligen Teilstrom getragenen und diese Sensoreinheit passierenden Körner des Verteilguts quantitativ erfasst. Auf Basis dieser Daten kann insbesondere die Querverteilung der Maschine durch Veränderung des Luftstroms gesteuert und optimiert werden.

Als Sensoreinheiten können insbesondere solche eingesetzt werden, die alle passierenden Körner erfassen und entsprechende Sensorsignale erzeugen. So haben sich als sinnvoll einsetzbare Sensoren für derartige Verfahren insbesondere piezoelektrisch arbeitende Sensoreinheiten mit piezoelektrisch arbeitenden Sensorflächen oder auch mit mehrere piezoelektrisch arbeitenden Sensorflächen erwiesen, an der/denen der gesamte Luftvolumenstrom mit dem darin beförderten Verteilgut unter Kontaktierung weitgehend aller im Luftstrom bzw. im jeweiligen Teilstrom getragenen Körner vorbeipassiert. Bei dem Verfahren ist eine Steuerung der Variationseinrichtung in Abhängigkeit von den Ausgangs- oder Impulssignalen der wenigstens einen Sensoreinheit vorgesehen. Außerdem sieht das Verfahren eine signaltechnische Koppelung der wenigstens einen Sensoreinheit mit einer Steuer- und/oder Regeleinheit vor, wobei die Steuer- und/oder Regeleinheit in Abhängigkeit von den Ausgangs- oder Impulssignalen der wenigstens einen Sensoreinheit die zumindest eine Einrichtung zur Variation des Luft- und/oder Kornvolumenstroms derart steuert, dass ein Durchlassquerschnitt und/oder ein Volumenstrom reguliert werden kann. Die steuerbaren Einrichtungen zur Variation des Luft- und/oder Kornvolumenstroms können jeweils durch steuerbare Ventile gebildet sein, die in den Anschlussstutzen angeordnet sind und deren Durchlassquerschnitt variieren. Diese Sensoreinheiten können jeweils den Ventilen innerhalb eines Förderabschnittes nachgeordnet sein. Das erfindungsgemäße Verfahren sieht vor, dass eine Ausbringmenge an Körnern an den Säscharen oder Ausbringeinrichtungen unter Regelung einer von der Dosiereinheit in den Luftvolumenstrom zugebbaren bzw. zudosierbaren Kornmenge sowie des Luftvolumenstroms variiert wird.

Eine typische landwirtschaftliche Verteilmaschine gemäß vorliegender Erfindung weist normalerweise einen großen Kornvorrat auf, der sich auf einem Anhängerfahrgestell befindet, gezogen von einer landwirtschaftlichen Zugmaschine. Die landwirtschaftliche Verteilmaschine oder Verteilvorrichtung, die im vorliegenden Zusammenhang auch als Sämaschine bezeichnet wird, weist zudem normalerweise eine zentrale Luftfördereinheit auf, insbesondere in Form eines Zentralgebläses, mit der ein Förderluftstrom erzeugt wird. Diesem Förderluftstrom wird aus dem zentralen Kornvorrat eine definierbare und/oder variabel steuerbare Kornmenge zudosiert, so dass der Förderluftstrom als Trägermedium für das zu Säscharen zu befördernde Korn dient. Der Förderluftstrom kann insbesondere durch eine abschnittsweise annähernd horizontal verlaufende Luftleitung befördert werden, der räumlich ein trichterförmiger Saatgutvorrat oder ein Vorrat für Verteilgut wie Dünger o. dgl. zugeordnet ist, der an seiner tiefsten Stelle des Trichters in eine innerhalb der Luftleitung angeordnete Dosiereinheit mündet, mit welcher das körnige Verteilgut bzw. das Saatgut dem von der Luftfördereinheit erzeugten Luftvolumenstrom zudosiert wird, so dass dieser im weiteren Förderverlauf als Trägermedium für das mittransportierte körnige Verteilgut bzw. Saatgut fungiert.

Die Luftleitung kann weiterhin in einem der Dosiereinheit nachgeordneten Abschnitt in eine Steigleitung münden, die normalerweise einen zumindest abschnittsweise vertikalen Verlauf aufweist und bspw. als Wellrohr ausgebildet sein kann. Am oberen Ende mündet diese Steigleitung bzw. das Wellrohr in einer zentralen Verteileinheit, die für eine Umlenkung des Luftvolumenstroms mitsamt dem mitgetragenen Verteilgut in eine Mehrzahl von horizontal oder schräg nach unten verlaufenden Verbindungsleitungen sorgt. Die Verbindungsleitungen führen jeweils zu den einzelnen Säscharen oder anderen bodennah angeordneten oder im Boden geführten Ausbringeinrichtungen für das Verteil- oder Saatgut.

Die Sensoreinheiten, die Teil der erfindungsgemäßen Verteilvorrichtung sind, sind jeweils in der zentralen Verteileinheit angeordnet, können jedoch auch den einzelnen Verbindungsleitungen zugeordnet sein. Wahlweise kann auch mehreren oder auch allen dieser Verbindungsleitungen jeweils eine separate Sensoreinheit zugeordnet sein. Die Sensoreinheit bzw. die Mehrzahl von Sensoreinheiten in der Verteileinheit und/oder in den Verbindungsleitungen dienen der quantitativen Erfassung weitgehend aller im Luftstrom bzw. im jeweiligen Teilstrom getragenen und diese Sensoreinheiten passierenden Körner des Verteilguts, so dass damit eine zuverlässige Messung des zu den Säscharen oder Ausbringeinrichtungen geförderten Verteilguts oder Saatguts ermöglicht ist. Die Sensoreinheiten erzeugen jeweils elektrische Ausgangssignale und liefern diese jeweils an eine Rechner- und Auswerteeinheit, die aus den Werten eine sinnvolle erste Stellgröße für wenigstens eine Einrichtung zur Variation des Luft- und/oder Kornvolumenstroms im Bereich der Verteileinheit und/oder im Bereich den dieser nachgeordneten Verbindungsleitungen gewinnt. Diese wenigstens eine Einrichtung zur Variation des Luft- und/oder Kornvolumenstroms kann insbesondere durch ein steuerbares Ventil gebildet sein, das in einem der Anschlussstutzen der Verteileinheit angeordnet ist, die zu den Verbindungsleitungen führen. Diese steuerbaren Ventile können jeweils ihren Durchlassquerschnitt variieren, wodurch der passierende Luft- und Kornvolumenstrom effektiv reguliert werden kann.

Weiterhin kann die Rechner- und Auswerteeinheit optionale weitere Stellgrößen bilden, mit der die Dosiereinheit und/oder die Luftfördereinheit in einer Weise gesteuert und/oder geregelt werden kann/können, dass das geförderte Luftvolumen und/oder das diesem zudosierte Verteilgut in ihren Volumina bzw. in ihrer Menge variiert und reguliert werden können.

Die oben erwähnte Luftleitung kann einen ungefähr horizontalen Verlauf aufweisen, an den sich bspw. ein 90°-Krümmer mit ungefähr kreisrundem Querschnitt anschließen kann, an den wiederum die vertikale Steigleitung anschließt, die ebenfalls einen kreisrunden Querschnitt aufweisen kann, der jedoch wahlweise über ihre Länge veränderlich sein kann. So kann sich bspw. unmittelbar an den Krümmer ein vertikaler Rohrabschnitt anschließen, der im oberen Bereich in ein Wellrohr mündet, das einen veränderlichen Rohrquerschnitt mit mehreren regelmäßig verteilten Einschnürungen und Erweiterungen aufweist. Das Wellrohr bildet an seiner Oberseite einen 90°-Übergang in die zentrale Verteileinheit, die insbesondere als Verteilerkopf ausgebildet sein kann, der die durch die Steigleitung und das Wellrohr senkrecht nach oben geführte Luftströmung mit dem darin getragenen Verteilgut weitgehend gleichmäßig nach allen Seiten zunächst in ungefähr horizontale Richtung umlenkt und weitgehend gleichmäßig in alle vorhandenen Leitungsanschlüsse verteilt, die an den Außenseiten des Verteilerkopfes angeordnet sind und jeweils über Anschlussstutzen zu den sich daran anschließenden Verbindungsleitungen verfügen.

Wahlweise kann jedem der Mehrzahl von Leitungsanschlüssen, die gleichmäßig über den Außenumfang des Verteilerkopfes verteilt angeordnet sind, in einem Krümmungsbereich zum horizontal wegführenden oder schräg nach unten führenden Anschlussstutzen jeweils eine separate Sensoreinheit zugeordnet sein. Die vorzugsweise in den Leitungsanschlüssen integrierten Sensoreinheiten können im gezeigten Ausführungsbeispiel z.B. jeweils als Prallsensoren ausgebildet sein, die eine berührungsempfindliche bzw. impulsempfindliche Kontaktfläche aufweisen, auf welche die dort umgelenkten Körner, die im Luftstrom getragen werden, aufprallen, so dass sie jeweils Einzelimpulse auslösen, die im Ausgangssignal jedes einzelnen Prallsensors enthalten sind, so dass eine exakte quantitative Erfassung aller im Luftstrom getragenen Körner ermöglicht ist. Die Prallsensoren können insbesondere nach einem piezoelektrischen Prinzip arbeiten, da solche Sensoren über eine besonders hohe mechanische Empfindlichkeit bei gleichzeitig minimalen Auslenkungen für die Erzeugung von Sensorsignalen verfügen.

Die Sensoreinheiten bzw. die Prallsensoren können an sinnvollen Stellen im Bereich der einzelnen Leitungsanschlüsse angeordnet sein. So können sie sich bspw. jeweils an den Außenseiten eines Krümmungsabschnittes befinden, der eine Verbindung eines ungefähr horizontalen, radial vom Rand des Verteilerkopfes nach außen weisenden Abschnittes des Leitungsanschlusses zu einem schräg nach unten führenden Anschlussstutzen schafft, an den die jeweilige Verbindungsleitung angeschlossen wird, die eine Leitungsverbindung zur Säschar herstellt.

An der Oberseite des Verteilerkopfes kann sich bspw. ein flacher Deckel befinden, der zur leichten Entnahme bei Bedarf über mehrere Flügelmuttern oder andere Befestigungseinrichtungen gelöst und entfernt werden kann, um die Innenseite des Verteilerkopfes zugänglich zu machen, bspw. für Wartungs- und/oder Reparaturmaßnahmen.

Die Leitungsanschlüsse mit den darin angeordneten Sensoren und Ventilen können insbesondere einen modularen Aufbau aufweisen, wobei sie sowohl die erforderlichen Anschlüsse zu ihrer Verankerung im Verteilerkopf als auch zur Aufnahme einer zu einer nachgeordneten Säschar führenden Verbindungsleitung umfassen. Außerdem müssen sie baulich geeignet und vorbereitet sein, um die jeweils vorzugsweise im Krümmungsbereich integrierte Sensoreinheit in Gestalt des Prallsensors o. dgl. sowie das zwischen dem Krümmungsbereich und dem mit dem Verteilerkopf verbindbaren Anschlussflansch angeordnete steuerbare Ventil aufzunehmen, das bspw. einen den Leitungsquerschnitt variabel verschließenden oder freigebenden Drehschieber o. dgl. umfasst, der um eine vertikale oder horizontale Schwenkachse verdrehbar ist und der über einen elektrischen oder pneumatischen oder auch hydraulischen Stellantrieb an einer Seite, z.B. an einer Oberseite des modularen Leitungsanschlusses betätigt, d.h. geöffnet oder geschlossen bzw. in eine Zwischenstellung gebracht wird.

Bei Verwendung eines Drehschiebers als Öffnungs- und Schließmechanismus für das Ventil kann dieser bspw. um eine vertikale oder horizontale Schwenkachse aus dem Bereich des Durchlasses des Leitungsquerschnittes verdreht werden, so dass er diesen komplett freigibt. Oder er kann so verdreht werden, dass er den Leitungsquerschnitt zumindest teilweise verschließt. Wahlweise kann auch ein Flachschieber oder eine andere Bauart von Ventilöffnungsmechanismen zum Einsatz kommen. Das Ventil kann den Leitungsquerschnitt wahlweise auch vollständig verschließen, was grundsätzlich für solche Fälle sinnvoll sein kann, bei denen eine Abschaltung bzw. Deaktivierung kompletter Säschare gewünscht ist, bspw. für eine Fahrgassenschaltung, bei denen solche Säschare, die Fahrspuren eines Zugfahrzeuges folgen, deaktiviert werden, um den generell beeinträchtigten Pflanzenaufwuchs solcher Pflanzen, die im Bereich der Fahrspuren aufwachsen würden, zu vermeiden.

Nachfolgend wird nochmal anhand einer beispielhaften Anordnung die Zusammenwirkung der verschiedenen Steuer- und/oder Regelkomponenten der erfindungsgemäßen Verteilvorrichtung bzw. Sämaschine erläutert. Hierbei wird das Verteilgut über eine pneumatische Kornförderung mittels der Luftfördereinheit über die Luftleitung und den zentralen Verteilerkopf sowie eine Vielzahl von Ausbringeinrichtungen bzw. Säscharen möglichst gleichmäßig in den Boden gebracht, wobei nach Möglichkeit jede einzelne Ausbringeinrichtung bzw. Säschar mit einer steuerbaren und/oder äquivalent großen Menge an Verteilgut bzw. Saatkörnern beaufschlagt werden kann.

Eine Mehrzahl von Sensoreinheiten ist innerhalb des Verteilerkopfes der zentralen Verteileinheit angeordnet. Jede dieser separaten Sensoreinheiten ist vorzugsweise einzelnen, insbesondere jedem einzelnen der Leitungsanschlüsse zugeordnet, so dass die geförderten Kornmengen in jeder einzelnen Verbindungsleitung erfasst werden können, welche die einzelnen Prallsensoren der Sensoren passieren. Die Anordnung der Sensoreinheiten innerhalb des Moduls charakterisiert die räumliche und bauliche Zuordnung der Sensoreinheiten, die jeweils einen konstruktiven Bestandteil der zentralen Verteileinheit bilden.

Die Ausgangssignale der einzelnen Sensoreinheiten werden in der zentralen Rechner- und Auswerteeinheit erfasst und zur Berechnung von sinnvollen Ausgangssignalen verwendet. Die ersten Ausgangssignale steuern die Ventilabschnitte, die in den Leitungsanschlüssen integriert sind und dort mittels der Drehschieber oder Öffnungsmechanismen unterschiedliche Durchlassquerschnitte der Zuführleitungen bzw. Leitungsquerschnitte in den Leitungsanschlüssen im Verteilerkopf einstellen, wodurch gleichzeitig die geförderte Kornmengen in den einzelnen Verbindungsleitungen variiert werden können. Die Anordnung der Stelleinheiten bzw. der steuerbaren Ventile innerhalb des Moduls charakterisiert wiederum die räumliche und bauliche Zuordnung der Ventileinheiten die jeweils einen konstruktiven Bestandteil der zentralen Verteileinheit bilden.

Optional kann die Rechner- und Auswerteeinheit je nach Bedarf eine zweite Stellgröße und/oder eine dritte Stellgröße liefern, mit der die Dosiereinheit und/oder die Luftfördereinheit in einer Weise gesteuert und/oder geregelt werden kann/können, dass das geförderte Luftvolumen und/oder das diesem zudosierte Verteilgut in ihren Volumina bzw. in ihrer Menge variiert und reguliert werden können. Auch mit diesen Stellgrößen wird direkt die geförderte Kornmenge beeinflusst. Allerdings sind die hierdurch gesteuerten Komponenten jeweils der Luftleitung zugeordnet und nicht der zentralen Verteileinheit.

Die eingesetzten Sensoren ermöglichen die Ermittlung der jeweiligen Aufprallgeschwindigkeiten an den Sensorflächen, da die Körner an den Sensorstellen im Luftstrom getragen werden, so dass die Luftgeschwindigkeit auch die Korngeschwindigkeiten bestimmt. Auf Basis der erfassten Korngeschwindigkeiten, die wiederum einen unmittelbaren Rückschluss auf die aktuellen Luftgeschwindigkeiten erlauben, können die Gebläse- und Strömungsgeschwindigkeiten der Ausbringvorrichtung beeinflusst und gesteuert werden. Auf diese Weise kann einerseits der optimale Wirkungsgrad der Maschine ermittelt werden.

Ein wesentlicher Vorteil der Erfassung der Korngeschwindigkeiten besteht zudem darin, dass eine maximale Korngeschwindigkeit einstellbar ist und vorgegeben werden kann, um auf diese Weise eventuelle Kornbeschädigungen beim Aufprall der Körner im Hauptverteiler oder an anderen Stellen des pneumatischen Systems zu vermeiden.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt eine schematische Ansicht einer Ausführungsvariante einer erfindungsgemäßen Verteilvorrichtung bzw. Sämaschine.
Fig. 2 zeigt in zwei schematischen Detailansichten eine zentrale Verteileinheit der Verteilmaschine gemäß Fig. 1.
Fig. 3 zeigt eine schematische Perspektivansicht einer Ausführungsvariante eines Verteilerkopfes der Verteilmaschine gemäß Fig. 1.
Fig. 4 zeigt eine schematische Perspektivansicht einer weiteren Ausführungsvariante des Verteilerkopfes der Verteilmaschine gemäß Fig. 1.
Fig. 5 zeigt in zwei schematischen Ansichten einen Leitungsanschluss des Verteilerkopfes gemäß Fig. 4, der mit einer Sensoreinheit und einem steuerbaren Ventil ausgestattet ist.
Fig. 6 zeigt in zwei schematischen Draufsichten den Leitungsanschluss gemäß Fig. 5 mit jeweils unterschiedlichen Ventilstellungen.
Fig. 7 zeigt anhand eines schematischen Blockschaltbildes die Zusammenwirkung der Steuer- und/oder Regelkomponenten der erfindungsgemäßen Verteilvorrichtung bzw. Sämaschine.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung oder das erfindungsgemäße Verfahren ausgestaltet sein können und stellen keine abschließende Begrenzung dar.

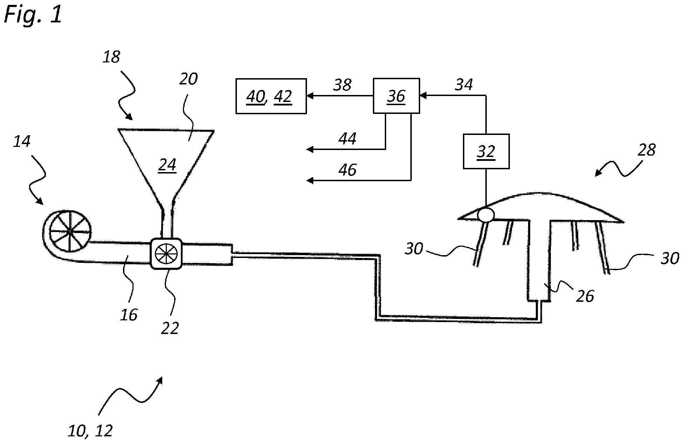

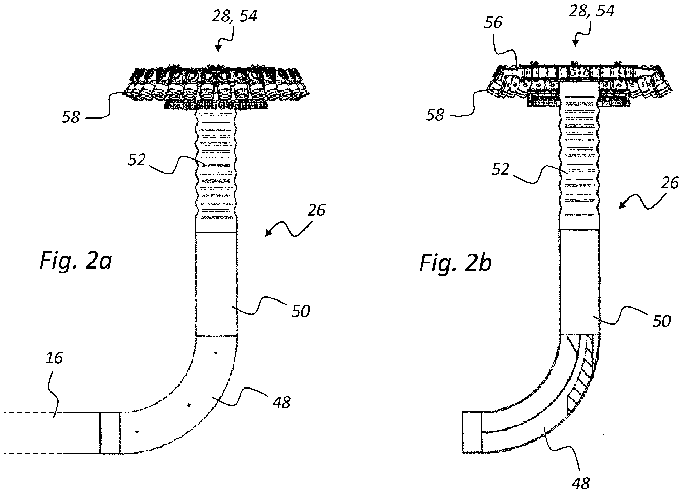

Die Fig. 1 zeigt in schematischer Weise den typischen Aufbau einer landwirtschaftlichen Verteilmaschine, wie sie in dieser oder in ähnlicher Form in vorliegender Erfindung zum Einsatz kommt. So umfasst die Verteilvorrichtung 10, die im vorliegenden Zusammenhang auch als Sämaschine 12 bezeichnet wird, eine Luftfördereinheit 14, insbesondere in Form eines Zentralgebläses, die/das der Erzeugung eines zentralen Luftvolumenstroms in einer Luftleitung 16 dient. Dieser zumindest abschnittsweise annähernd horizontal verlaufenden Luftleitung 16 ist räumlich ein trichterförmiger Saatgutvorrat 18 oder ein Vorrat für Verteilgut wie Dünger o. dgl. zugeordnet, der an seiner tiefsten Stelle des Trichters 20 in eine innerhalb der Luftleitung 16 angeordnete Dosiereinheit 22 mündet, mit welcher das körnige Verteilgut 24 bzw. das Saatgut dem von der Luftfördereinheit 14 erzeugten Luftvolumenstrom zudosiert wird, so dass dieser im weiteren Förderverlauf als Trägermedium für das mittransportierte körnige Verteilgut 24 bzw. Saatgut fungiert. Die Luftleitung 16 mündet in einem der Dosiereinheit 22 nachgeordneten Abschnitt in eine Steigleitung 26, die in der Fig. 2 näher verdeutlicht ist. Die Steigleitung 26 weist normalerweise einen zumindest abschnittsweise vertikalen Verlauf auf und mündet an ihrem oberen Ende in einer zentralen Verteileinheit 28, die für eine Umlenkung des Luftvolumenstroms mitsamt dem mitgetragenen Verteilgut 24 in eine Mehrzahl von horizontal oder schräg nach unten verlaufende Verbindungsleitungen 30 sorgt. Die Verbindungsleitungen 30 führen jeweils zu einzelnen Säscharen oder anderen bodennah angeordneten oder im Boden geführten Ausbringeinrichtungen für das Verteil- oder Saatgut, die jedoch in der Fig. 1 nicht dargestellt sind.

Die Fig. 1 lässt außerdem einige weitere Komponenten der erfindungsgemäßen Verteilvorrichtung 10 bzw. Sämaschine 12 erkennen, die dort schematisch angedeutet sind. Hierbei handelt es sich um wenigstens eine Sensoreinheit 32, die typischerweise in der zentralen Verteileinheit 28 angeordnet, jedoch normalerweise einer einzelnen Verbindungsleitung 30 zugeordnet ist. Wahlweise kann auch mehreren oder auch allen dieser Verbindungsleitungen jeweils eine separate Sensoreinheit 32 zugeordnet sein. Die Sensoreinheit 32 bzw. die Mehrzahl von Sensoreinheiten 32 in der Verteileinheit und/oder in den Verbindungsleitungen 30 dienen der quantitativen Erfassung weitgehend aller im Luftstrom bzw. im jeweiligen Teilstrom getragenen und diese Sensoreinheit 32 passierenden Körner des Verteilguts 24, so dass damit eine zuverlässige Messung des zu den Säscharen oder Ausbringeinrichtungen geförderten Verteilguts 24 oder Saatguts ermöglicht ist.

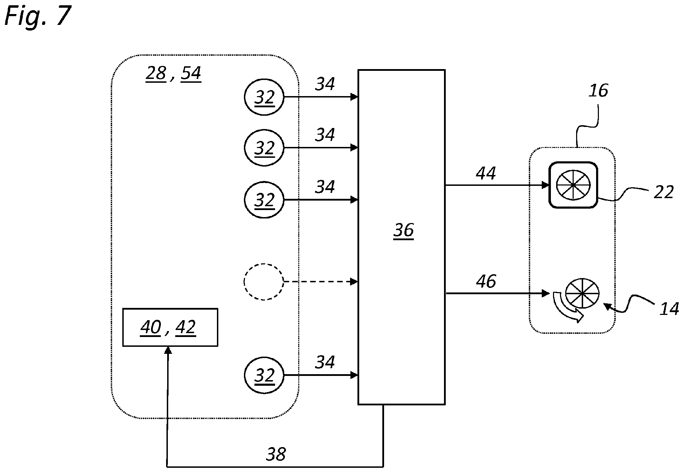

Weiterhin liefert die wenigstens eine Sensoreinheit 32 bzw. die Mehrzahl von Sensoreinheiten 32 ihre Ausgangssignale 34 jeweils an eine Rechner- und Auswerteeinheit 36, die aus den Werten eine sinnvolle erste Stellgröße 38 für wenigstens eine Einrichtung 40 zur Variation des Luft- und/oder Kornvolumenstroms im Bereich der Verteileinheit 28 und/oder im Bereich den dieser nachgeordneten Verbindungsleitungen 30 gewinnt. Diese wenigstens eine Einrichtung 40 zur Variation des Luft- und/oder Kornvolumenstroms kann insbesondere durch ein steuerbares Ventil 42 gebildet sein (vgl. hierzu auch Fig. 7), das in einem der Anschlussstutzen der Verteileinheit 28 angeordnet ist, die zu den Verbindungsleitungen 30 führen. Diese steuerbaren Ventile 42 können jeweils ihren Durchlassquerschnitt variieren, wodurch der passierende Luft- und Kornvolumenstrom effektiv reguliert werden kann.

Weiterhin kann die Rechner- und Auswerteeinheit 36 je nach Bedarf eine zweite Stellgröße 44 und/oder eine dritte Stellgröße 46 liefern, mit der die Dosiereinheit 22 und/oder die Luftfördereinheit 14 in einer Weise gesteuert und/oder geregelt werden kann/können, dass das geförderte Luftvolumen und/oder das diesem zudosierte Verteilgut 24 in ihren Volumina bzw. in ihrer Menge variiert und reguliert werden können. Diese Wirkzusammenhänge werden anhand des schematischen Blockschaltbildes der Fig. 7 näher erläutert.

Die beiden schematischen Darstellungen der Fig. 2 zeigen eine Seitenansicht (Fig. 2a) sowie einen Längsschnitt (Fig. 2b) eines Förderabschnittes der Verteilvorrichtung 10 bzw. der Sämaschine 12 gemäß Fig. 1. Gezeigt ist ein Übergang von einem horizontalen Leitungsabschnitt nach der Dosiereinheit (vgl. Fig. 1), der in einem 90°-Krümmer mit ungefähr kreisrundem Querschnitt mündet, an den wiederum die vertikale Steigleitung 26 anschließt, die ebenfalls einen kreisrunden Querschnitt aufweisen kann, der jedoch über ihre Länge veränderlich sein kann, wie dies die Fig. 2 erkennen lässt. So schließt sich unmittelbar an den Krümmer 48 ein vertikaler Rohrabschnitt 50 an, der im oberen Bereich in ein Wellrohr 52 mündet, das einen veränderlichen Rohrquerschnitt mit mehreren regelmäßig verteilten Einschnürungen und Erweiterungen aufweist. Das Wellrohr 52 bildet an seiner Oberseite einen 90°-Übergang in die zentrale Verteileinheit 28, die hier als Verteilerkopf 54 ausgebildet ist, der die durch die Steigleitung 26 und das Wellrohr 52 senkrecht nach oben geführte Luftströmung mit dem darin getragenen Verteilgut weitgehend gleichmäßig nach allen Seiten zunächst in ungefähr horizontale Richtung umlenkt und weitgehend gleichmäßig in alle vorhandenen Leitungsanschlüsse 56 verteilt, die an den Außenseiten des Verteilerkopfes 54 angeordnet sind und jeweils über Anschlussstutzen 58 zu den sich daran anschließenden Verbindungsleitungen 30 (vgl. Fig. 1) verfügen.

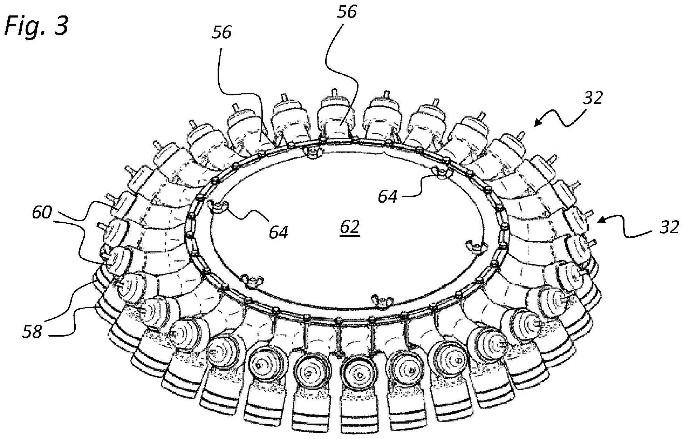

Die Figuren 2a und 2b lassen zudem andeutungsweise die anhand der Fig. 3 näher erläuterten Sensoreinheiten 32 zur quantitativen Erfassung weitgehend aller im Luftstrom bzw. im jeweiligen Teilstrom getragenen und diese Sensoreinheit 32 passierenden Körner des Verteilguts 24 erkennen. Wie es die Figuren 2 und 3 erkennen lassen, ist jedem der insgesamt dreißig Leitungsanschlüsse 56, die gleichmäßig über den Außenumfang des Verteilerkopfes 54 verteilt angeordnet sind, in einem Krümmungsbereich zum schräg nach unten führenden Anschlussstutzen 58 jeweils eine separate Sensoreinheit 32 zugeordnet. Die in den Leitungsanschlüssen 56 integrierten Sensoreinheiten 32 können im gezeigten Ausführungsbeispiel jeweils als Prallsensoren 60 ausgebildet sein, die eine berührungsempfindliche bzw. impulsempfindliche Kontaktfläche aufweisen, auf welche die dort umgelenkten Körner, die im Luftstrom getragen werden, aufprallen, so dass sie jeweils Einzelimpulse auslösen, die im Ausgangssignal 34 jedes einzelnen Prallsensors 60 enthalten sind, so dass eine exakte quantitative Erfassung aller im Luftstrom getragenen Körner ermöglicht ist. Die Prallsensoren 60 können insbesondere nach einem piezoelektrischen Prinzip arbeiten, da solche Sensoren über eine besonders hohe mechanische Empfindlichkeit bei gleichzeitig minimalen Auslenkungen für die Erzeugung von Sensorsignalen verfügen.

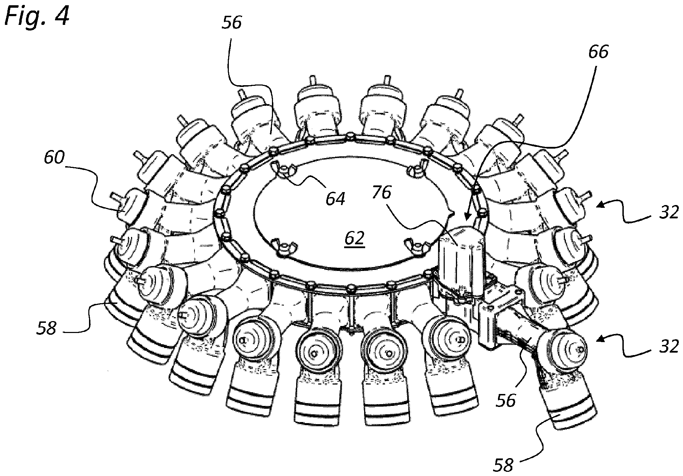

Die schematische Perspektivansicht der Fig. 3 lässt erkennen, wie die Sensoreinheiten 32 bzw. die Prallsensoren 60 im Bereich der einzelnen Leitungsanschlüsse 56 angeordnet sind. Sie befinden sich jeweils an den Außenseiten eines Krümmungsabschnittes 62, der eine Verbindung eines ungefähr horizontalen, radial vom Rand des Verteilerkopfes 54 nach außen weisenden Abschnittes des Leitungsanschlusses 56 zum schräg nach unten führenden Anschlussstutzen 58 schafft, an den die jeweilige Verbindungsleitung 30 (vgl. Fig. 1) angeschlossen wird, die eine Leitungsverbindung zur Säschar herstellt. Im gezeigten Ausführungsbeispiel weist der Verteilerkopf 54 insgesamt dreißig gleichmäßig voneinander beabstandete, jeweils radial nach außen weisende Leitungsanschlüsse 56 auf. Er könnte aber wahlweise auch weniger als dreißig oder auch mehr als dreißig Leitungsanschlüsse 56 aufweisen, bspw. zwischen ca. zwölf und bis zu sechzig oder mehr Anschlüsse. So zeigt die Fig. 4 einen Verteilerkopf 54, der zwanzig gleichmäßig über seinen Umfang verteilte Leitungsanschlüsse 56 aufweist.

Klarstellend sei an dieser Stelle erwähnt, dass die Darstellung der Fig. 3 keine Einrichtungen 40 zur Variation des Luft- und/oder Kornvolumenstroms bzw. steuerbare Ventile 42 erkennen lässt, die in der Darstellung der Fig. 1 schematisch anhand von Blockschaltsymbolen verdeutlicht sind. Die Darstellung der Fig. 3 ist lediglich als Ausführungsbeispiel zu verstehen, bei der die Einrichtungen 40 bzw. Ventile 42 zwar nicht erkennbar, aber an geeigneter Stelle vorhanden sind.

Die schematische Perspektivansicht der Fig. 4 lässt anhand einer weiteren Ausführungsvariante deutlich die sinnvolle Positionierung der in Fig. 3 nicht gesondert eingezeichneten Einrichtungen 40 zur Variation des Luft- und/oder Kornvolumenstroms bzw. steuerbare Ventile 42 erkennen. Gezeigt ist in Fig. 4 ein Verteilerkopf 54 mit insgesamt zwanzig gleichmäßig voneinander beabstandeten, jeweils radial nach außen weisenden Leitungsanschlüssen 56. Einer dieser Leitungsanschlüsse 56 weist in seinem horizontalen Abschnitt, in unmittelbarer Nähe zum Außenrand des Verteilerkopfes 54, einen Ventilabschnitt 66 auf, an den sich der weitere horizontale Leitungsabschnitt anschließt, in dem die Sensoreinheit 32 angeordnet ist, der wiederum der nach unten führende Anschlussstutzen 58 nachgeordnet ist. Wenn auch die Fig. 4 nur einen einzelnen Leitungsanschluss 56 mit einem solchen Ventilabschnitt 66 zeigt; so sind in der Praxis sinnvollerweise mehrere Leitungsanschlüsse 56 in der gezeigten Weise ausgebildet und mit Ventilabschnitten 66 ausgestattet. Gleiches gilt für den Verteilerkopf 54 gemäß Fig. 3. Da es nicht zwingend erforderlich ist, alle Leitungsanschlüsse 56 in der gezeigten Weise mit Ventilabschnitten 66 auszustatten, kann es bspw. genügen, jeden zweiten, dritten oder vierten Leitungsanschluss 56 in der entsprechenden Weise mit solchen Ventilen 66 auszustatten. Auf diese Weise werden normalerweise die gewünschten Ergebnisse ebenso gut erreicht wie bei einer kompletten Ausstattung aller Leitungsanschlüsse 56.

An der Oberseite des Verteilerkopfes 54 gemäß Fig. 3 und gemäß Fig. 4 befindet sich jeweils ein flacher Deckel 62, der zur leichten Entnahme bei Bedarf über mehrere Flügelmuttern 64 gelöst und entfernt werden kann, um die Innenseite des Verteilerkopfes 54 zugänglich zu machen, bspw. für Wartungs- und/oder Reparaturmaßnahmen.

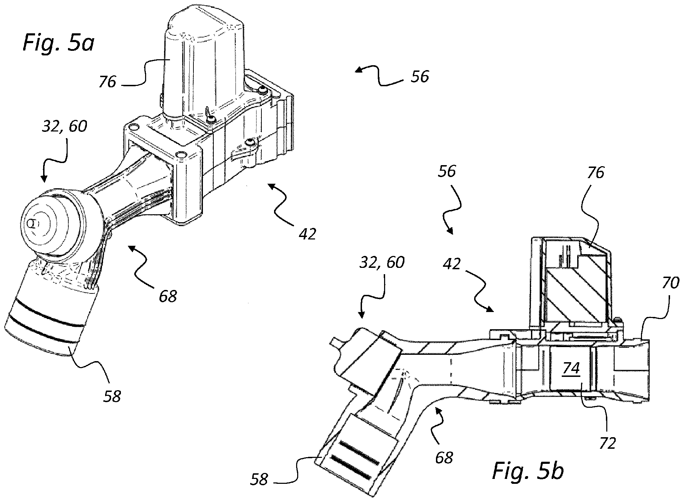

Die schematischen Darstellungen der Fig. 5 verdeutlichen eine denkbare und sinnvolle Gestaltungsvariante für die Leitungsanschlüsse 56. Dabei zeigt die Fig. 5a eine schematische Perspektivansicht und die Fig. 5b einen schematischen Längsschnitt eines der Leitungsanschlüsse 56, wie er sich beispielhaft bereits in der Fig. 4 (im rechten Vordergrund des Verteilerkopfes) angedeutet findet. Der gezeigte Leitungsanschluss 56 weist einen modularen Aufbau auf und beinhaltet sowohl die erforderlichen Anschlüsse zu seiner Verankerung im Verteilerkopf 54 sowie zur Aufnahme einer zu einer nachgeordneten Säschar führenden Verbindungsleitung 30 (vgl. Fig. 1), als auch die im Krümmungsbereich 68 integrierte Sensoreinheit 32 in Gestalt des Prallsensors 60 sowie das zwischen dem Krümmungsbereich 68 und dem mit dem Verteilerkopf 54 verbindbaren Anschlussflansch 70 angeordnete steuerbare Ventil 42, das im gezeigten Ausführungsbeispiel einen den Leitungsquerschnitt 72 variabel verschließenden oder freigebenden Drehschieber 74 umfasst, der um eine vertikale Schwenkachse verdrehbar ist und der über einen elektrischen Stellantrieb 76 an der Oberseite des modularen Leitungsanschlusses 56 betätigt, d.h. geöffnet oder geschlossen bzw. in eine Zwischenstellung gebracht wird.

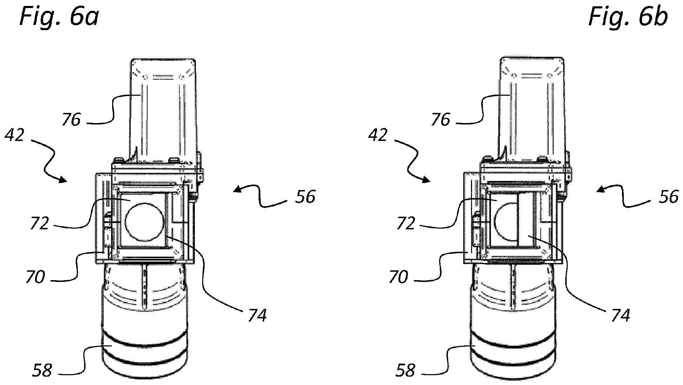

Die beiden schematischen Draufsichten von Seiten des Anschlussflansches 70, d.h. von Seiten des Verteilerkopfes 54, auf den Leitungsquerschnitt 72 lassen den geöffneten Leitungsquerschnitt 72 (links, Fig. 6a) sowie einen teilweise geschlossenen Leitungsquerschnitt 72 (rechts, Fig. 6b) erkennen. Der Drehschieber 74 ist hierbei gemäß Fig. 6a entweder um seine vertikale Schwenkachse aus dem Bereich des Durchlasses des Leitungsquerschnittes 72 verdreht, so dass er diesen komplett freigibt. Oder er kann gemäß Fig. 6b zumindest so verdreht sein, dass er den Leitungsquerschnitt 72 zumindest teilweise verschließt. Eine noch weitergehende Verschlussstellung bzw. eine vollständige Abdeckung des Leitungsquerschnittes 72 durch den Drehschieber 74 ist grundsätzlich für solche Fälle denkbar, bei denen eine Abschaltung bzw. Deaktivierung kompletter Säscharen gewünscht ist, bspw. für eine Fahrgassenschaltung, bei denen solche Säscharen, die Fahrspuren eines Zugfahrzeuges folgen, deaktiviert werden, um den generell beeinträchtigten Pflanzenaufwuchs solcher Pflanzen, die im Bereich der Fahrspuren aufwachsen würden, zu vermeiden.

Das schematische Blockschaltbild der Fig. 7 verdeutlicht nochmals die Zusammenwirkung der verschiedenen Steuer- und/oder Regelkomponenten der erfindungsgemäßen Verteilvorrichtung 10 bzw. Sämaschine 12, bei der das Verteilgut 24 über eine pneumatische Kornförderung mittels der Luftfördereinheit 14 über die Luftleitung 16 und den zentralen Verteilerkopf 54 sowie eine Vielzahl von Ausbringeinrichtungen bzw. Säscharen möglichst gleichmäßig in den Boden gebracht werden soll, so dass nach Möglichkeit jede einzelne Ausbringeinrichtung bzw. Säschar mit einer steuerbaren und/oder äquivalent großen Menge an Verteilgut 24 bzw. Saatkörnern beaufschlagt werden kann.

Die Fig. 7 lässt eine Mehrzahl von Sensoreinheiten 32 erkennen, die jeweils innerhalb des Verteilerkopfes 54 der zentralen Verteileinheit 28 angeordnet sind. Jede dieser separaten Sensoreinheiten 32 ist vorzugsweise einzelnen, insbesondere jedem einzelnen der Leitungsanschlüsse 56 (vgl. Fig. 2) zugeordnet, so dass die geförderten Kornmengen in jeder einzelnen Verbindungsleitung 30 erfasst werden können, welche die einzelnen Prallsensoren 60 der Sensoren 32 passieren. Die Anordnung der Sensoreinheiten 32 innerhalb des Moduls 28 charakterisiert die räumliche und bauliche Zuordnung der Sensoreinheiten 32, die jeweils einen konstruktiven Bestandteil der zentralen Verteileinheit 28 bilden.

Die Ausgangssignale 34 der einzelnen Sensoreinheiten 32 werden in der zentralen Rechner- und Auswerteeinheit 36 erfasst und zur Berechnung von sinnvollen Ausgangssignalen 38, 44 und/oder 46 verwendet. Die ersten Ausgangssignale 38 steuern die Ventilabschnitte 66, die in den Leitungsanschlüssen 56 integriert sind (vgl. Figuren 4 und 5) und dort mittels der Drehschieber 74 unterschiedliche Durchlassquerschnitte der Zuführleitungen bzw. Leitungsquerschnitte 72 in den Leitungsanschlüssen 56 im Verteilerkopf 54 einstellen, wodurch gleichzeitig die geförderte Kornmengen in den einzelnen Verbindungsleitungen 30 variiert werden können. Die Anordnung der Stelleinheiten 40 bzw. der steuerbaren Ventile 42 innerhalb des Moduls 28 charakterisiert wiederum die räumliche und bauliche Zuordnung der Ventileinheiten 40 bzw. 42, die jeweils einen konstruktiven Bestandteil der zentralen Verteileinheit 28 bilden.

Weiterhin lässt die Fig. 7 eine optionale Steuerung weiterer Luft- und Kornförderkomponenten erkennen. So kann die Rechner- und Auswerteeinheit 36 je nach Bedarf eine zweite Stellgröße 44 und/oder eine dritte Stellgröße 46 liefern, mit der die Dosiereinheit 22 und/oder die Luftfördereinheit 14 in einer Weise gesteuert und/oder geregelt werden kann/können, dass das geförderte Luftvolumen und/oder das diesem zudosierte Verteilgut 24 in ihren Volumina bzw. in ihrer Menge variiert und reguliert werden können. Auch mit diesen Stellgrößen 44 und 46 wird direkt die geförderte Kornmenge beeinflusst. Allerdings sind die hierdurch gesteuerten Komponenten 14 und 22 jeweils der Luftleitung 16 zugeordnet und nicht der zentralen Verteileinheit 28.

Es sei in diesem Zusammenhang rein vorsorglich darauf hingewiesen, dass eine Verteilvorrichtung 10 bzw. Sämaschine 12, wie sie anhand der vorliegenden Ausführungsvarianten beschrieben wurde, wahlweise auch zwei oder mehr solche zentralen Verteileinheiten 28 aufweisen kann, die jeweils durch einen separaten Verteilerkopf 54 gebildet sein können, die wiederum jeweils einen Aufbau gemäß einer der Figuren 2 bis 4 aufweisen können. Bei Vorhandensein von zwei, drei oder mehr solchen Verteilerköpfen 54 sind diese normalerweise gleichartig aufgebaut und dimensioniert, so dass sie jeweils ungefähr einen gleichen Bruchteil der insgesamt geförderten Luft- und Verteilgutmenge aufnehmen und in eine jeweils gleich große Anzahl von Verbindungsleitungen 30 aufteilen. Insbesondere bei Sämaschinen 12 mit einer sehr großen Arbeitsbreite und bspw. vierzig oder mehr nebeneinander angeordneten Säreihen kann es sinnvoll sein, mit zwei oder drei gleichartigen und gleich dimensionierten Verteilerköpfen 54 zu arbeiten, die auf einem gemeinsamen Trägergestell einer gezogenen Sämaschine angeordnet sind, ggf. kombiniert mit einem gemeinsamen großen Saatgutvorrat 18. Diese Sämaschine 12 wird normalerweise von einer landwirtschaftlichen Zugmaschine (nicht dargestellt) gezogen, die über eine ausreichende Zugleistung verfügt.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

10 Verteilvorrichtung
12 Sämaschine
14 Luftfördereinheit, Gebläse
16 Luftleitung
18 Saatgutvorrat, Verteilgutvorrat
20 Trichter
22 Dosiereinheit
24 Verteilgut, Saatgut
26 Steigleitung
28 Verteileinheit
30 Verbindungsleitung
32 Sensoreinheit
34 Ausgangssignal
36 Rechner- und Auswerteeinheit
38 erste Stellgröße
40 Einrichtung zur Variation des Luft- und/oder Kornvolumenstroms
42 Ventil, steuerbares Ventil
44 zweite Stellgröße
46 dritte Stellgröße
48 Krümmer, Leitungskrümmer
50 Rohrabschnitt
52 Wellrohr
54 Verteilerkopf
56 Leitungsanschluss
58 Anschlussstutzen
60 Prallsensor
62 Deckel
64 Flügelmutter
66 Ventilabschnitt
68 Krümmungsbereich
70 Anschlussflansch
72 Leitungsquerschnitt
74 Drehschieber
76 Stellantrieb, elektrischer Stellantrieb

## Patentansprüche

1. Verteilvorrichtung (10) für granulatartiges Verteilgut (24), insbesondere für körniges Saatgut, Dünger, insbesondere Sämaschine (12), mit einer Luftfördereinheit (14) zur Erzeugung eines Luftvolumenstroms, der eine Dosiereinheit (22) zur steuerbaren Zuteilung des Verteilguts (24) oder Saatguts zum Luftvolumenstrom zu-oder nachgeordnet ist, und mit wenigstens einer Verteileinheit (28) zur Aufteilung des das Verteilgut (24) tragenden Luftvolumenstroms von wenigstens einer Haupt- oder Speiseleitung (16, 26) zu einer Mehrzahl von Verbindungsleitungen (30), die jeweils zu einzelnen Säscharen oder anderen bodennah angeordneten oder im Boden geführten Ausbringeinrichtungen für das Verteil- oder Saatgut (24) führen, wobei im Bereich der Verteileinheit (28) und/oder innerhalb eines Verbindungsabschnittes wenigstens einer der von der Verteileinheit (28) mündenden Verbindungsleitungen Sensoreinheiten (32) zur Erfassung weitgehend aller im Luftstrom bzw. im jeweiligen Teilstrom getragenen und diese Sensoreinheiten (32) passierenden Körner des Verteilguts (24) angeordnet sind, wobei die Sensoreinheiten (32) signaltechnisch mit wenigstens einer Einrichtung (40) zur Variation eines Luft-und/oder Kornvolumenstroms im Bereich der Verteileinheit (28) und/oder den dieser nachgeordneten Verbindungsleitungen (30) gekoppelt sind,
wobei die Verteileinheit (28) durch einen Verteilkopf (54) gebildet ist, der eine Mehrzahl von ungefähr konzentrisch angeordneten Anschlussstutzen (58) oder Leitungsanschlüssen (56) aufweist, die jeweils in die Schlauchleitungen (30) münden, wobei zumindest einem oder einigen der Anschlussstutzen (58) bzw. Leitungsanschlüssen (56) jeweils Sensoreinheiten (32) zur quantitativen Erfassung des den Anschlussstutzen (58) bzw. den Leitungsanschluss (56) jeweils passierenden Teilstroms zugeordnet sind;
wobei die wenigstens eine steuerbare Einrichtung (40) zur Variation des Luft- und/oder Kornvolumenstroms jeweils durch steuerbare Ventile (42) gebildet ist, die in den Anschlussstutzen (58) bzw. Leitungsanschlüssen (56) angeordnet sind und deren Durchlassquerschnitt (72) variieren, und wobei die Sensoreinheiten (32) signaltechnisch mit einer Steuer- und/oder Regeleinheit (36) gekoppelt sind;
und wobei die Steuer- und/oder Regeleinheit (36) in Abhängigkeit von den Ausgangs- oder Impulssignalen (34) der Sensoreinheiten (32) die zumindest eine Einrichtung (40) zur Variation des Luft-und/oder Kornvolumenstroms derart steuert, dass ein Durchlassquerschnitt (72) und/oder ein Volumenstrom regulierbar ist,
**dadurch gekennzeichnet, dass**
die Sensoreinheiten (32) mit den Ventilen (42) in einem Regelkreis verschaltet sind, der eine Ausbringmenge an Körnern (24) an den Säscharen oder Ausbringeinrichtungen unter Regelung einer von der Dosiereinheit (22) in den Luftvolumenstrom zugebbaren Kornmenge sowie des Luftvolumenstroms variiert.

2. Verteilvorrichtung nach Anspruch 1, bei der die Steuer- und/oder Regeleinheit (36) eine zweite und/oder dritte Stellgröße liefert, mit denen die Dosiereinheit (22) und/oder die Luftfördereinheit (14) zur Variation des geförderten Luftvolumens und/oder des diesem zudosierten Verteilguts in ihren Volumina bzw. in ihrer Menge steuerbar und/oder regelbar sind.

3. Verteilvorrichtung nach einem der Ansprüche 1 bis 2, bei der die Sensoreinheiten (32) jeweils den Ventilen (42) innerhalb eines Förderabschnittes bzw. Leitungsanschlusses (56) nachgeordnet sind.

4. Verfahren zur geregelten Ausbringung und/oder Verteilung von granulatartigem Verteilgut (24), insbesondere von körnigem Saatgut, Dünger o. dgl., insbesondere zur Aussaat, bei dem einem Luftvolumenstrom das Verteilgut (24) oder Saatgut zudosiert und einer Verteileinheit (28) zugeführt wird, in der der das Verteilgut (28) tragende Luftvolumenstrom von wenigstens einer Haupt- oder Speiseleitung (16, 26) zu einer Mehrzahl von Verbindungsleitungen (30), die jeweils zu einzelnen Säscharen oder anderen bodennah angeordneten oder im Boden geführten Ausbringeinrichtungen für das Verteil- oder Saatgut führen, aufgeteilt wird, wobei im Bereich der Verteileinheit (28) und/oder innerhalb eines Verbindungsabschnittes wenigstens einer der von der Verteileinheit (28) mündenden Verbindungsleitungen (30) weitgehend alle im Luftstrom bzw. im jeweiligen Teilstrom getragenen Körner des Verteilguts (24) erfasst werden, wobei in Abhängigkeit von der erfassten Kornmenge der Luft- und/oder Kornvolumenstrom im Bereich der Verteileinheit (28) und/oder den dieser nachgeordneten Verbindungsleitungen (30) und/oder ein Durchlassquerschnitt (72) der wenigstens einen Verbindungsleitung (30) variiert wird, **dadurch gekennzeichnet, dass** eine Ausbringmenge an Körnern an den Säscharen oder Ausbringeinrichtungen unter Regelung einer von der Dosiereinheit (22) in den Luftvolumenstrom zugebbaren Kornmenge sowie des Luftvolumenstroms variiert wird.

## Claims

1. A distribution apparatus (10) for granular-type distribution goods (24), in particular for granular seeds, fertiliser, in particular a sowing machine (12), with an air conveyor unit (14) for generating an air volume flow, with a metering unit (22) for the controllable allocation of the distribution goods (24) or seeds to the air volume flow being disposed at or downstream from said air conveyor unit (14); and with at least one distribution unit (28) for dividing the air volume flow carrying the distribution goods (24) from at least one main line or feed line (16, 26) to a plurality of connection lines (30) that each lead to individual sowing coulters or other spreading devices for the distribution goods or seeds (24), said sowing coulters or other spreading devices being disposed near ground level or being guided in the soil; wherein sensor units (32) are disposed in the area of the distribution unit (28) and/or within a connection section of at least one of the connection lines leading from the distribution unit (28), said sensor units (32) being for detecting substantially all grains of the distribution goods (24) that are being carried in the airstream or in the particular partial flow, as the case may be, and that pass said sensor units (32); wherein the sensor units (32) are coupled in terms of signalling with at least one device (40) for varying an air volume flow and/or a grain volume flow in the area of the distribution unit (28) and/or of the connection lines (30) disposed downstream therefrom;
wherein the distribution unit (28) is formed by a distributor head (54) having a plurality of approximately concentrically disposed connecting spouts (58) or line connections (56) that each lead into the hose lines (30); wherein at least one or some of the connecting spouts (58) or line connections (56), as the case may be, each have sensor units (32) associated with them for the quantitative detection of the particular partial flow passing the connecting spout (58) or the line connection (56), as the case may be;
wherein the at least one controllable device (40) for varying the air volume flow and/or the grain volume flow is in each case formed by controllable valves (42), which are disposed in the connecting spouts (58) or in the line connections (56), as the case may be, and which vary their passage cross-section (72); and wherein the sensor units (32) are coupled in terms of signalling with a control unit and/or with a regulating unit (36);
and wherein the control unit and/or regulating unit (36) controls the at least one device (40) for varying the air volume flow and/or the grain volume flow based on the output signals or pulse signals (34) of the sensor units (32) such that a passage cross-section (72) and/or a volume flow is regulatable,
**characterised in that**
the sensor units (32) and the valves (42) are interconnected in a control loop that varies a spreading quantity of grains (24) at the sowing coulters or at the spreading devices with regulating a grain quantity that is addable by a metering unit (22) into the air volume flow as well as with regulating the air volume flow.

2. The distribution apparatus as recited in claim 1, with the control unit and/or regulating unit (36) supplying a second and/or third control variable, by means of which the metering unit (22) and/or the air conveyor unit (14) are controllable and/or regulatable for the purpose of varying the conveyed air volume and/or the distribution goods metered thereinto in terms of their volumes or in terms of their quantity, as the case may be.

3. The distribution apparatus as recited in one of the claims 1 to 2, with the sensor units (32) being in each case disposed downstream from the valves (42) within a conveyor section or within a line connection (56), as the case may be.

4. A method for regulated spreading and/or distributing of granular-type distribution goods (24), in particular of granular seeds, fertiliser, or the like, in particular for sowing, with the distribution goods (24) or seeds being metered into an air volume flow and fed to a distribution unit (28), in which the air volume flow that carries the distribution goods (24) is divided from at least one main line or feed line (16, 26) to a plurality of connection lines (30), each leading to individual sowing coulters or other spreading devices for the distribution goods or seeds, said sowing coulters or other spreading devices being disposed near ground level or being guided in the soil; wherein substantially all grains of the distribution goods (24) that are being carried in the airstream or in the particular partial flow, as the case may be, are detected in the area of the distribution unit (28) and/or within a connection section of at least one of the connection lines (30) leading from the distribution unit (28); wherein the air volume flow and/or the grain volume flow in the area of the distribution unit (28) and/or of the connection lines (30) disposed downstream therefrom and/or a passage cross-section (72) of the at least one connection line (30) is varied based on the detected grain quantity;
**characterised in that** a spreading quantity of grains at the sowing coulters or at the spreading devices is varied with regulating a grain quantity that is addable by a metering unit (22) into the air volume flow as well as with regulating the air volume flow.

## Revendications

1. Dispositif de distribution (10) pour des matières à distribuer (24) de type granulés, en particulier pour des semences, engrais granulaires, en particulier semoir (12), avec une unité de transport d'air (14) destinée à générer un débit volumique d'air, à laquelle est associée ou en aval de laquelle est montée une unité de dosage (22) servant à ajouter par dosage, de manière commandable, les matières à distribuer (24) ou les semences au débit volumique d'air, et avec au moins une unité de distribution (28) pour répartir le débit volumique d'air portant les matières à distribuer (24) depuis au moins une conduite principale ou d'alimentation (16, 26) vers une pluralité de conduites de liaison (30) qui mènent chacune vers des socs semeurs individuels ou vers d'autres dispositifs d'épandage pour les matières à distribuer ou les semences (24), lesquels sont disposés à proximité du sol ou guidés dans le sol, dans lequel des unités de capteur (32) destinées à détecter dans une large mesure l'ensemble des grains des matières à distribuer (24), qui sont portés dans le courant d'air (26) ou bien dans le courant partiel respectif et passent par ces unités de capteur (32), sont disposées au niveau de ladite unité de distribution (28) et/ou à l'intérieur d'une section de liaison de l'une au moins des conduites de liaison débouchant de l'unité de distribution (28), dans lequel les unités de capteur (32) sont couplées en technique de signal à au moins un dispositif (40) destiné à faire varier un débit volumique d'air et/ou de grains au niveau de l'unité de distribution (28) et/ou dans les conduites de liaison (30) disposées en aval de celle-ci,
dans lequel ladite unité de distribution (28) est constituée par une tête de distribution (54) qui comprend une pluralité de tubulures de raccordement (58) ou raccords de conduite (56) disposé(e)s de manière à peu près concentrique qui débouchent chacun(e)s dans les conduites en tuyau souple (30), dans lequel des unités de capteur (32) servant à détecter de manière quantitative le courant partiel passant respectivement par la tubulure de raccordement (58) ou bien le raccord de conduite (56) sont associées à au moins un(e) ou à quelques-un(e)s des tubulures de raccordement (58) ou bien raccords de conduite (56);
dans lequel ledit au moins un dispositif (40) commandable servant à faire varier le débit volumique d'air et/ou de grains est constitué respectivement par des vannes (42) commandables qui sont disposées à l'intérieur des tubulures de raccordement (58) ou bien raccords de conduites (56) et font varier la section de passage (72) de celles-ci ou bien ceux-ci, et dans lequel les unités de capteur (32) sont couplées en technique de signal à une unité de commande et/ou d'asservissement (36),
et dans lequel ladite unité de commande et/ou d'asservissement (36) commande ledit au moins un dispositif (40) de variation du débit volumique d'air et/ou de grains, en fonction des signaux de sortie ou d'impulsion (34) des unités de capteur (32), de telle sorte qu'une section de passage (72) et/ou un débit volumique est réglable, **caractérisé par le fait que**
les unités de capteur (32) et les vannes (42) sont montées les unes avec les autres en une boucle d'asservissement qui fait varier une quantité d'épandage de grains (24) sur les socs semeurs ou dispositifs d'épandage en réglant une quantité de grains à ajouter par dosage, par ladite unité de dosage (22), dans le débit volumique d'air, ainsi que le débit volumique d'air.

2. Dispositif de distribution selon la revendication 1, dans lequel ladite unité de commande et/ou d'asservissement (36) fournit une deuxième et/ou troisième grandeur réglante(s) au moyen desquelles l'unité de dosage (22) et/ou l'unité de transport d'air (14) sont commandables et/ou réglables pour faire varier le volume d'air transporté et/ou les matières à distribuer qui sont ajoutées par dosage à celui-ci, quant à leurs volumes ou bien à leur quantité.

3. Dispositif de distribution selon l'une quelconque des revendications 1 à 2, dans lequel les unités de capteur (32) sont montées chacune en aval des vannes (42) à l'intérieur d'une section de transport ou bien d'un raccord de conduite (56).

4. Procédé d'épandage et/ou de distribution réglé(e) de matières à distribuer (24) de type granulés, en particulier de semences, engrais granulaires ou similaires, en particulier pour les semailles, dans lequel les matières à distribuer (24) ou les semences sont ajoutées par dosage à un débit volumique d'air qui est amené à une unité de distribution (28) à l'intérieur de laquelle le débit volumique d'air portant les matières à distribuer (24) est réparti depuis au moins une conduite principale ou d'alimentation (16, 26) vers une pluralité de conduites de liaison (30) qui mènent chacune vers des socs semeurs individuels ou vers d'autres dispositifs d'épandage pour les matières à distribuer ou les semences, lesquels sont disposés à proximité du sol ou guidés dans le sol, dans lequel dans une large mesure l'ensemble des grains des matières à distribuer (24), qui sont portés dans le courant d'air ou bien dans le courant partiel respectif sont détectés au niveau de ladite unité de distribution (28) et/ou à l'intérieur d'une section de liaison de l'une au moins des conduites de liaison (30) débouchant de l'unité de distribution (28), dans lequel on fait varier, en fonction de la quantité de grains détectée, le débit volumique d'air et/ou de grains au niveau de l'unité de distribution (28) et/ou dans les conduites de liaison (30) disposées en aval de celle-ci, et/ou une section de passage (72) de ladite au moins une conduite de liaison (30), **caractérisé par le fait que** l'on fait varier une quantité d'épandage de grains sur les socs semeurs ou dispositifs d'épandage en réglant une quantité de grains à ajouter par dosage, par ladite unité de dosage (22), dans le débit volumique d'air, ainsi que le débit volumique d'air.
